# EUROPEAN PATENT SPECIFICATION

(11) **EP 4 736 119 B1**
(45) Date of publication and mention of the grant of the patent: **19.08.2026**
(21) Application number: 23739394.7
(22) Date of filing: 30.06.2023
(51) Int. Cl.: G06T 7/593

(54) **METHOD FOR LOCALIZATION OF AT LEAST ONE OBJECT**
VERFAHREN ZUR LOKALISIERUNG MINDESTENS EINES OBJEKTS
PROCÉDÉ DE LOCALISATION D'AU MOINS UN OBJET

(43) Date of publication of application: 06.05.2026
(73) Proprietor: Telefonaktiebolaget LM Ericsson (publ), 164 83 Stockholm (SE)
(72) Inventor: PULERI, Marzio, 00065 Fiano Romano (RM) (IT); PEPE, Teresa, 56019 Vecchiano (IT)
(74) Representative: Ericsson
(86) International application number: PCT/SE2023/050688
(87) International publication number: WO 2025/005843

(56) References cited:
- US-B2- 10 140 872
- US-B2- 9 117 310
- IBISCH ANDR� ET AL: "Arbitrary object localization and tracking via multiple-camera surveillance system embedded in a parking garage", PROCEEDINGS OF SPIE, IEEE, US, vol. 9407, 4 March 2015 (2015-03-04), pages 94070G - 94070G, XP060046468, ISBN: 978-1-62841-730-2, DOI: 10.1117/12.2075528

## Description

### TECHNICAL FIELD

The disclosure herein relates to a computer, and a system, and methods thereof. In particular, the embodiments relate to enabling localization of at least one object. Computer programs and a computer program product are also disclosed.

### BACKGROUND

Precise positioning of objects has been an issue for automated logistics.

Several different technologies are used for this purpose each with their own advantages and disadvantages compared to each other. For example, in some cases, small radio terminals can be placed on a freight, thereby relying on Global Position System (GPS) positioning when outdoors or Wi-Fi, Long Term Evolution (LTE), or 5^{th} Generation (5G) triangulation, which is available both indoors and outdoors.

Bluetooth Low Energy (BLE) beacons with terminals on objects and vehicles are also used, for example these are used in certain mines and mining operations. Another way of detecting the position of a freight can be the use of stereovision. In this case the object position is determined using epipolar geometry or triangulation.

The problem in these cases is the amount of devices needed, their overall cost, maintenance and as well as the accuracy that can be achieved utilizing these methods.

Small GPS devices can have an accuracy of several meters and to increase the accuracy more expensive GPS devices or the integration with other radio reference signals may be needed.

There are several techniques that can be used to detect the position location of an object.

A first method is a Signal strength based, this utilizes a Received Signal Strength Indication (RSSI) localization technique based on measuring signal strength from a client device to several access points; it typically has an accuracy of about 2 to 4 meters.

A second method is Fingerprinting based, again utilizing RSSI, and the second method relies on the creation of a map of signal strengths received by access points. Wherein, the position is inferred taking into consideration the measured vectors. The accuracy is between 0.6 and 1.3 m. Its main disadvantage is that any change to the environment, for example, adding or removing object within the environment, can modify the fingerprint that corresponds to each location, therefore requiring an update to the fingerprint database.

A third method is angle of arrival based, this technique is generally more accurate than the other two, but requires special hardware, such as an array of six to eight antennas.

A camera may be used to determine the position of an object, normally using epipolar geometry. Epipolar geometry may use stereovision utilizing two cameras that are able capture an image of the object from the same side. The two cameras may be placed at a specified distance apart so that they view the object with different angles, yet to apply epipolar geometry the two images must overlap. This means that the two cameras must be placed within a certain range from each other. The closer they are the lower is the position resolution as far as the distance from the object increases. In general, the error at 50 m is a few meters. If any one of the two cameras observing the object is masked by some obstacle, then the stereovision may not work.

The article Abandoned Object Detection via Temporal Consistency Modeling and Back-Tracing Verification for Visual Surveillance. IEEE TRANSACTIONS ON INFORMATION FORENSICS AND SECURITY, VOL. 10, NO. 7, JULY 2015, by Kevin Lin, S.-C. C.-S.-T.-P. (2015), discloses methods for automatic detection of objects.

US 9 117 310 B2 discloses A virtual camera system comprises a plurality of physical cameras and a hardware setup miming software to create virtual viewpoints for the virtual camera system. The disclosure provides a method for creating a virtual viewpoint of a plurality of images captured by the plurality of cameras, the images comprising current frames and previous frames.

US 10 140 872 B2 discloses a method operating a camera system by distilling a moving foreground image from a frame, calculating a two-dimensional trajectory for the moving foreground object, determining a three dimensional position for the moving foreground object, displaying the three-dimensional position on a map of an area.

In IBISCH ANDRE ET AL: "Arbitrary object localization and tracking via multiple-camera surveillance system embedded in a parking garage", PROCEEDINGS OF SPIE, IEEE, US, vol. 9407, 4 March 2015 (2015-03-04), pages 94070G-94070G, a system's pipeline starts with the synchronized image capturing process separately for each camera. In the next step, moving objects are selected by a foreground segmentation approach. Subsequently, the foreground objects from a single camera are transformed into view rays in a common world coordinate system and are joined to receive plausible object hypotheses.

### SUMMARY

An object of the invention is to provide an improved localization of objects using a plurality of cameras.

According to a first aspect of the invention there is provided a method for localization of at least one object in a main reference system. The method comprises receiving first image data obtained by a first camera located at a first position in the main reference system. The first camera has a first point of view of at least a portion of the main reference system. The first point of view has an origin (i.e. its origin) at the first position. The method further comprises receiving second image data obtained by a second camera located at a second position in the main reference system. The second camera has a second point of view of at least another portion of the main reference system. The second point of view has an origin (i.e. its origin) at the second position and is at angle with regards to the first point of view. The method further comprises detecting a first object of the at least one object based on the received first image data, calculating a first pyramid which originates from the origin of the first camera and which envelops the detected first object. The method further comprises detecting the first object based on the received second image data, and calculating a second pyramid which originates from the origin of the second camera and which envelops the detected first object. The method further comprises calculating an intersection of the first pyramid and the second pyramid, and determining a location of the first object based on the calculated intersection.

According to a second aspect of the invention there is provided a computer for localization of at least one object in a main reference system. The computer comprises processing circuitry configured to cause the computer to receive first image data obtained by a first camera located at a first position in the main reference system. The first camera has a first point of view of at least a portion of the main reference system, and the first point of view has an origin at the first position. The processing circuitry is further configured to cause the computer to receive second image data obtained by a second camera located at a second position in the main reference system. The second camera has a second point of view of at least another portion of the main reference system. The second point of view has an origin at the second position and is at angle with regards to the first point of view. The processing circuitry is further configured to cause the computer to detect a first object of the at least one object based on the received first image data, and calculate a first pyramid which originates from the origin of the first camera and which envelops the detected first object. The processing circuitry is further configured to cause the computer to detect the first object based on the received second image data, and calculate a second pyramid which originates from the origin of the second camera and which envelops the detected first object. The processing circuitry is further configured to cause the computer to calculate an intersection of the first pyramid and the second pyramid, and determine a location of the first object based on the calculated intersection.

According to a third aspect of the invention there is provided a system for localization of at least one object in a main reference. The system comprises a first camera located at a first position in the main reference system, a second camera located at a second position in the main reference system, and a computer according to the second aspect, wherein the computer is communicatively connected to the first camera and the second camera. The system may comprise substantially any number of cameras, such as more than two cameras.

According to a fourth aspect of the invention there is provided a computer program. The computer program comprising instructions which when executed on a processor of a computer causes the computer to perform a method according to the first aspect of the invention.

According to a fifth aspect of the invention there is provided a computer program product. The computer program product comprising a computer readable storage medium on which a computer program according to the fourth aspect of the invention is stored.

The main reference system may correspond to an area of interest, such as, for example, a physical location. The physical location may be, for example, a warehouse, or an operation, building and/or construction site. The main reference system may map onto the area of interest. Physical limitations, such as, but not limited to, floors, walls, and/or ceilings of the area of interest may be defined in terms of the main reference system.

The area of interest, such as a physical location, may comprise one or more machines used for moving objects. A machine of the one or more machines may be, for example, a forklift, a truck, or a similar machine used for moving objects. The one or more machines may comprise a navigation system, such as, for example GNSS, or GPS, configured for determining a position of the one or more machine. The position of a machine transporting, carrying, or moving an object, as determined by its navigation system, may be compared to, or used in conjunction with, the position of the object as determined by the present invention.

The positions of the different cameras may be different. For example, the first position may be different from the second position. If there are three or more cameras, two cameras may be arranged at the same positions but angled differently, such that the respective point of views of said two cameras is different.

The point of views of the cameras may together cover all of, or substantially all of, the main reference system. Thereby, the point of views of the camera may cover substantially all of an area of interest. The point of view a camera may be understood as the space which may be observed by said camera. The point of view may extend from an origin of the camera, or, phrased differently, from a focal vertex of the camera. Thereby, the origin of a camera may be interpreted as a focal vertex of the camera. Further, the origin of a camera may be understood as the origin of the point of view of said camera.

The received image data may comprise a series of subsequent images, such as a stream of images, i.e. video images, captured by a corresponding camera. An image of received image data may have the form of a two-dimensional image plane. Such a dimensional image plane may be what may be captured from the point of view of said corresponding camera.

Detecting an object of the at least one object based on received image data may comprise determining an area, such as a square or a box, of the image plane of the received image data which comprises, or surrounds, the detected object.

Calculating a pyramid which originates from the origin of a camera and which envelops a detected object, i.e. an object detected based on received image data captured by said camera, may comprise defining, or calculating, a geometrical shape which extends from the origin of said camera (i.e. which may correspond to a focal vertex or a centra of said camera) and extends through the determined area of the image plane. When the determined area of the image plane has a rectangular shape, then the geometrical shape has a pyramidical shape. However, it is to be understood that calculating a pyramid may, alternatively, comprise calculate a non-pyramidical geometrical shape, which extends from the origin of the camera and which envelops the detected object. The pyramidical shape may, in theory, extend infinitely. However, the pyramidical shape may also be limited, to for example, not extend beyond one or more predetermined boundaries of the main reference system.

The enabling of the transportation of an object may be achieved by determining a location in three dimensions of at least one object. For example, standard cartesian coordinates, such as x-y-z coordinates, may be used for localization, or determining position(s). Further coordinate systems such as spherical coordinates, in terms or r, phi, theta variables, or cylindrical coordinates, on terms of r, phi, z variables, may also be used. The terms coordinate system and reference systems may be used interchangeably herein. Cartesian x-y-z coordinates are used herein, but it is to be understood that such coordinates can of course be transposed into any type of suitable coordinate system, or reference system, adequate for the task. x- and y-locations may be indicated using a local coordinate system with origin references point within an area of interest, further, the x and y coordinates may be indicated using different in latitude and longitude or other form of standardized location reference.

The first point of view may correspond to a first reference system and the second point of view corresponds to a second reference system. Positions on the main reference system, the first reference system and the second reference system can be mapped to each other by using affine transformations. Using affine transformations may comprise using Denavit-Hartenberg rules convention.

The location, or position, of the pyramid (i.e. the pyramidical shape or the geometrical shape) extending may be defined based on the reference system related to the camera from which the pyramid extends. For example, the location of a first pyramid (which extends from an origin of the first camera) may be defined based on the first reference system.

The intersection of two pyramids may be understood as being a polyhedron, or as having a polyhedron shape.

Determining a location of the object further may comprise calculating a Chebyshev center of a polyhedron defined by the intersection of the first pyramid and the second pyramid. Calculating a Chebyshev center may comprise calculating a center of a sphere having largest possible volume that can fit into the intersection of the two pyramids.

Detecting the object based on the received first and/or second image data may comprise using a temporal foreground integration method. The temporal foreground integration method may include a background subtraction method, such as, but not limited to a MOG-, a MOG2-, and/or a GMG-method.

Further, detecting the object based on the received first and/or second image data may comprise using a temporal dual-rate foreground integration method for static-foreground estimation, using image data received from a single camera (i.e. video images from a single camera). Such methods may involve constructing short- and long-term background models learnt from received image data.

Having received image data, i.e. a sequence of images It (t ∈ N), wherein the images have a size of m×n, the principle of a general background modeling and updating procedure can be summarized as follows:
1) Initialize a background model B(x, y) for each pixel (x, y), 0 ≤ x ≤ m - 1, and 0 ≤ y ≤ n - 1.
2) For every pixel (x, y) of the incoming image It, if It (x, y) ∈ B(x, y), then (x, y) is classified as a background pixel, otherwise it is considered a foreground pixel.
3) For every newly identified background pixel (x, y), update B(x, y) by considering the new training sample, It (x, y).
4) t ← t + 1, go to Step 2).

In this procedure, a learning rate λ ∈ [0, 1] is typically applied to update the background in Step 3). The learning rate provides a tradeoff between λB and (1 - λ) It, and thus the preceding model B is tuned toward the new training data It faster when λ is smaller in the incremental updating.

In the MOG method the background model B(x, y) is recorded as an mixture-of-Gaussian distribution in RGB color space. The learning rate λ is applied to update the mixture-distribution model when the new color It (x, y) is observed and (x, y) is identified as a background pixel.

Two background models are built using a large and a small learning rate respectively, λ_{L} and λ_{S}.

The two B(x,y) models feed a pixel-based finite-state machine, FSM, used to identify the static foreground based on the sequence pattern of each pixel. The pixel-based FSM works as follows.

The small learning rate λ_{S} updates the short-term background model BS at a faster speed. FS denotes the binary foreground image obtained using this short-term model. The large learning rate λ_{L} yields the model that is updated at a slower speed, the long-term background model BL. FL denotes the binary foreground image obtained using the long-term model. The combination of long- and short-term background models allows for detecting stationary objects.

When an object enters the monitored area it appears as part of the foreground in both FL and FS. When it stops, due to the different learning rates, the object becomes part of the BS background in a shorter time, disappearing from the FS. At the end it becomes part of both BS and BL.

At each pixel a 4 states FSM can be associated, with the 2 bits state described as: Si = FL(i)FS(i), where FL(i), and FS(i) ∈ {0, 1} represent the binary values of pixel i of the two foreground images.

The four states represented by the two-bit code Si have the following meaning: Si = 00 indicates that pixel i is a background pixel because it is classified as background by both BL and BS, Si = 01 implies that pixel i is an uncovered background pixel that has been temporarily occluded by an object and then exposed in a recent image, Si = 10 indicates that pixel i is likely to be a static foreground pixel, and Si = 11 indicates that pixel i corresponds to a moving object.

When detecting new static objects, the method is may be looking for pixels with a state value of 10, because these are foreground pixels that have existed for a long time, as indicated by their long-term presence under the long-term model, and they haven't moved or vibrated for a considerable period of time; thus, the short-term model is expected to reject it soon. Because noise could result from imperfect background modeling, the evaluation must be made using a sequence of images. The pixel classification for single images is typically insufficient. The algorithm makes use of temporal-continuity information to improve the performance implemented using the above-discussed pixel-based FSM. The Pixel-based FSM describes the following rule: given a two-bit code sequence, if there is consecutive subsequence starting by a series of 11 and followed by a sufficiently long series of 10, then this subsequence is a detection of the static foreground.

The at least one object may comprise at least two objects. The method according to the first aspect of the present invention may be further comprising, and, correspondingly, the processing circuitry may be further configured to cause the computer according to the second aspect of the present invention to: detecting a second object of the at least two objects based on the received first image data, calculating another first pyramid which originates from the origin of the first camera and which envelops the detected second object, detecting the second object based on the received second image data, calculating another second pyramid which originates from the origin of the second camera and which envelops the detected second object, calculating an intersection of the other first pyramid and the other second pyramid, and determining a location of the second object based on the calculated intersection.

The method according to the first aspect of the invention may further comprise detecting a predetermined object based on the received first image data. A position of the predetermined object in the main reference system may be predetermined and a size and/or a shape of the predetermined object may be predetermined. The method may further comprise calculating an angle and a distance between the first camera and the predetermined object, and updating the first position in the main reference system, at which the first camera is located, based on the calculated angle and distance between the first camera and the predetermined object.

The predetermined object may comprise, or be constituted by, a scannable code or reference image. The scannable code may be, for example, a QR code or a barcode. The reference image may be predetermined, which may include it having a predetermined shape, a predetermined size, and/or a predetermined pattern. The method according to the first aspect, and/or the system according to the second aspect, may comprise receiving, and/or storing information, relating to the reference image.

Cameras in the area of interest (i.e. located within the main reference system) could be nomadic, which may that they may be able to move, or be moved, within the area of interest. In other words, the locations, or positions, of the cameras may change over time. To adapt to cameras changing their positions, an automated pointing procedure may be used to determine (new) positions of cameras.

In an exemplary embodiment, a scannable code, which may be a QR code of 10 cm x 10 cm, may be used as a target for the automated pointing procedure. The target may be placed in a predetermined position in area of interest, wherein the target can be seen by the cameras, i.e. the target is within the point of view(s) of the camera(s). The automated pointing procedure is not limited to using a single target, and may use a plurality of targets.

The automated pointing procedure may implement a scannable code detector, such as QR code detector, which may analyze the image data captured by a camera and may be configured to detects the scannable code in the image data. The scannable code detector may be configured to determine value of the scannable code, such as a QR code value, and the coordinates of the scannable code with regards to any of the reference systems, such as the main reference systems and/or the reference system corresponding to the camera capturing said image data.

The size of the scannable code may be known in advance, or predetermined, and thereby a distance from the camera to the scannable code may be determined.

The scannable code may be not aligned with the camera point view, and therefore, image perspective may have to be taken into account.

In an exemplary embodiment the scannable code comprises a QR code panel comprising a QR code of a predetermined size. The QR code panel may rotate in place, and an angle of the QR code at a given timepoint may be known. The QR code may be detected and vertices of the QR code may be stored in terms of one of the reference systems. Then, a position of a center of the QR code may be calculated, in terms of one of the reference systems.

In this exemplary embodiment, the camera may be configured to adjust its orientation (wherein the adjustment may be performed by one or more actuators, and/or one or more servo motors, of the camera) so as to point to (substantially) directly towards the center of the QR code. A horizontal angle, h, of the camera may be calculated, and the delta position of the center of the QR code may be calculated. The procedure may be iterative and may use past captured image data as feedback.

The exemplary embodiment may further comprise detecting that x-coordinates of the vertices of a horizontal edge of the QR code are (substantially) equal (with a small tolerance in case of few pixels), then the exemplary embodiment may comprise capturing the vertices of the horizontal edges of the QR code again. The captured vertices of the horizontal edges may then be used to compute the distance between the QR code and the camera. Simultaneously, the angle of the QR code may registered. The angle of the QR code may be with regards to any of the reference systems. Further, there may be a reference system corresponding to the QR code.

The exemplary embodiment may further comprise, compute an angle, α, which may relate to an angle between two vectors, each vector extending between on respective vertex of the QR code. The number of pixels between the said vertices and the delta angle associated to each pixel may be used to calculate the angle α.

Further, the calculated distance from the two horizontal edges to the camera may be used to calculate a length from an origin of the point of view of the camera to a center of the QR code.

Furthermore, the camera may be arranged at a height difference with regards to the QR code, such as being arranged on a wall or on a pole, within the area of interest.

Then, if angles of the camera and the QR code are known, then a distance, along the floor, between the camera and the QR code may be determined.

Once the above-discussed distances and angles of the camera (and the QR code) are known, it may be possible to compute the position and orientation of the camera in the with regards to the reference systems.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The disclosure is now described, by way of example, with reference to the accompanying drawings, in which:
Figure 1a illustrates a camera detecting an object.
Figure 1b illustrates two cameras detecting an object.
Figure 2 illustrates four cameras and five reference systems.
Figure 3 illustrates two cameras in an area of interest.
Figure 4 illustrates a computer, a computer program, and a computer program product.
Figure 5 illustrates a system.
Figures 6a-6c illustrate methods for localization of at least one object.

### DETAILED DESCRIPTION

The disclosure will now be described more in detail hereinafter with reference to the accompanying drawings, in which certain embodiments of the disclosure are shown. This disclosure may, however, be embodied in many different forms and should not be construed as limited to the embodiments set forth herein; rather, these embodiments are provided as examples of embodiments within the claimed scope.

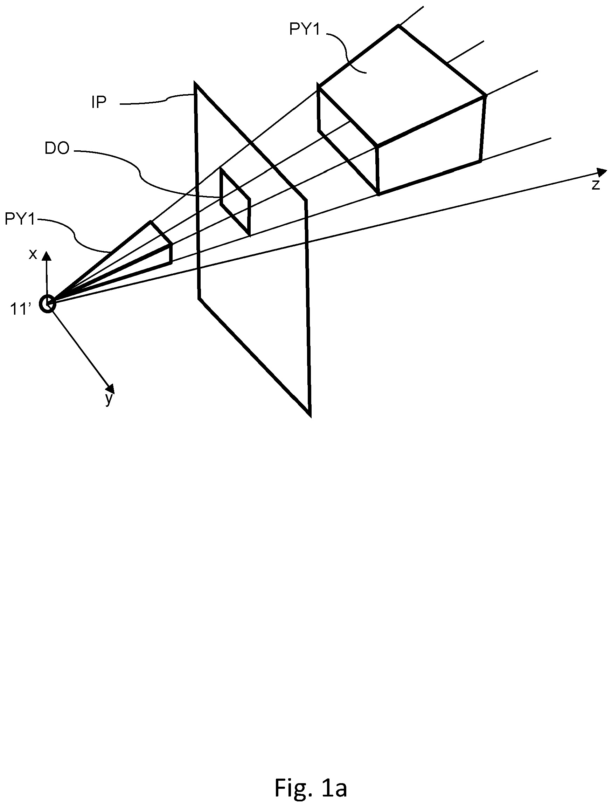

Figure 1a illustrates a camera (not shown) detecting an object (not directly shown).

More specifically, Figure 1a depicts the detection of an object, as seen by a first camera from an origin 11' of said first camera located at a first position. The camera has a first point of view, which may be understood as that said camera being able to capture (substantially) everything within said first point of view. By the term "being able to capture (substantially) everything within a point of view" it may be meant, for example, being able to project substantially everything viewable from the origin of said point view onto an image plane IP.

In Figure 1a, the point of view of the first camera corresponds to a first reference system. The first reference system is illustrated as a cartesian coordinate system, with the x-, y- and z-axes illustrated. However, it is to be understood that the present invention is not limited to such a reference system. Further, the origin 11' of the first reference system corresponds to the origin 11' of the first point of view.

An object has been detected based on first image data captured by the first camera. This is indicated in Figure 1a as the rectangle DO which lies in the same plane as the image plane IP.

Then, a pyramid PY1, or pyramidical shape, is calculated, wherein the pyramid PY1, originates from the origin 11' and extends through the rectangle DO. In other words, the vertices of the pyramid PY1 may be understood as intersecting the sides of the rectangle DO. In Figure 1a, a first portion of the pyramid PY1 is only indicated as extending a limited distance. However, it is to be understood that the pyramid PY1 may extend substantially infinitely, and that the present illustration is only made to provide an increased understanding of the present concept. To illustrate that the pyramid PY1 extends further, a second portion of the pyramid PY1 is indicated after the image plane IP, which is indicated as a filled cuboid.

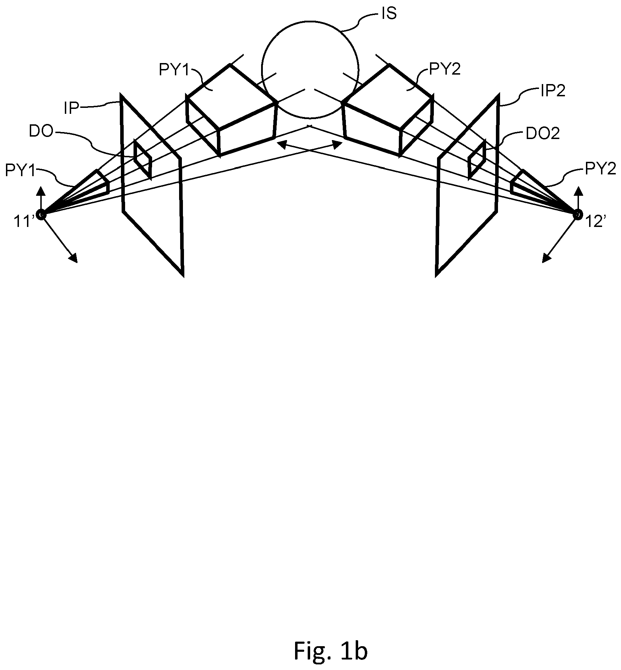

Figure 1b illustrates two cameras (not shown) detecting an object. The two cameras, are essentially identical to the first camera illustrated in Figure 1a. Therefore, reference is made to Figure 1a and the corresponding text.

A difference between what is illustrated in Figure 1b and what is illustrated in Figure 1a, is that Figure 1b shows a second camera which detects the object from an origin 12' of said second camera located at a second position, which is different from the first position. The point of view of the first and second cameras are arranged at an angle.

The object has also been detected based on second image data captured by the second camera. This is indicated in Figure 1b by rectangle DO2 which lies in the same plane as an image plane IP2 of the second camera.

Then, a pyramid PY2 which originates from the origin 12' of the second camera and extends through the rectangle DO2.

As the first camera and the second camera have detected the same object, the pyramids PY1, PY2 intersect. The intersection IS may have a polyhedron shape. Determining a location of the object further may comprise calculating a Chebyshev center of the polyhedron defined by the intersection of the first pyramid PY1 and the second pyramid PY2. Calculating a Chebyshev center may comprise calculating a center of a sphere IS having largest possible volume that can fit into the intersection of the two pyramids.

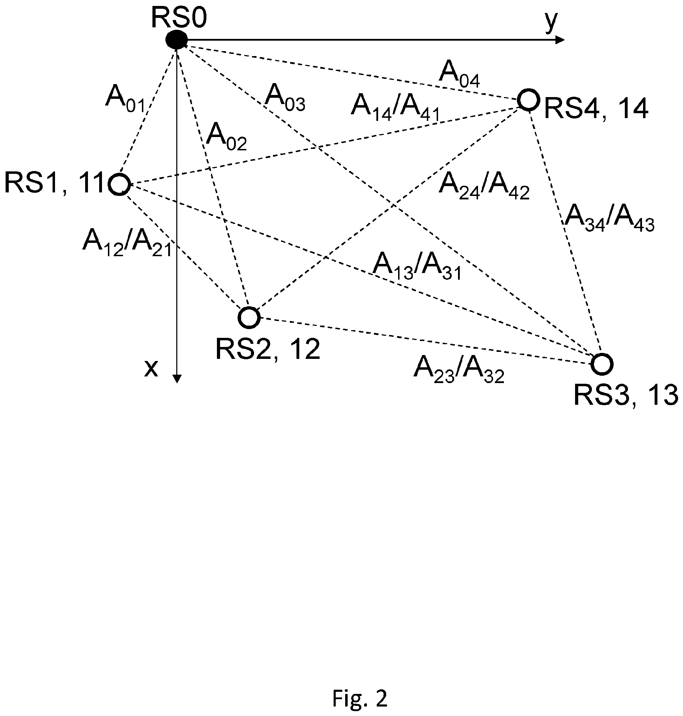

Figure 2 illustrates four cameras 11, 12, 13,14 and five reference systems RS0, RS1, RS2, RS3, RS4.

A main reference system RS0 may relate to an area of interest (not shown). Each of the remaining four reference systems RS1, RS2, RS3, RS4 may relate to a corresponding camera 11, 12, 13, 14.

The cameras 11, 12, 13, 14 are placed at different locations in the area of the interest, and each of the cameras 11, 12, 13, 14 may have a unique point of view which corresponds to the respective reference system RS1, RS2, RS3, RS4.

It is possible to map locations from one reference system RS0, RS1, RS2, RS3, RS4 to another reference system using affine transformations. By defining all the possible affine transformations required to pass from one reference system RS0, RS1, RS2, RS3, RS4 to another. In Figure 2 Aₕₖ represents the affine transformation from RSk to RSh.

The purpose of these transformations is to allow the remapping of points in any reference system RS0, RS1, RS2, RS3, RS4 to any other reference system RS0, RS1, RS2, RS3, RS4 and especially to the main reference system RS0.

For example, if it may be possible to define the A₀ₕ matrices, then we could have a direct mapping of RSk on RS0. If not possible, a chain of transformation will be used (e.g. an indirect mapping of RS2 on RS0 can be done applying the following chain of transforms: RS2-RS1-RS0 → A₀₃=A₀₁*A₁₂*A₁₃).

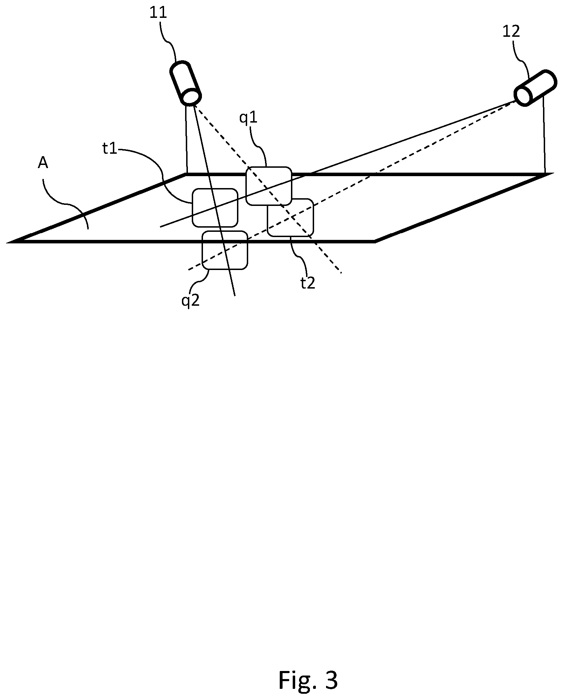

Figure 3 illustrates two cameras 11, 12 in an area of interest A.

The area of interest A may be mapped with regards to a main reference system RS0. The area of interest A may be, for example, a warehouse, or a site of operation.

Figure 3 shows two targets t1, t2, which are correctly detected by each of the cameras 11, 12. The positions of the two targets t1, t2 are correctly determined by the calculated intersection of the pyramids originating from the two cameras 11,12, respectively. More specifically, a first pyramid of the first camera 11 and a first pyramid of the second camera 12, wherein both first pyramids are indicated in Figure 3 as straight solid lines, envelops the first target t1. Correspondingly, a second pyramid of the first camera 11 and a second pyramid of the second camera 12, wherein both second pyramids are indicated in Figure 3 as straight dashed lines, envelops the second target t2.

However, as can be readily seen in Figure 3, the second pyramid of the first camera 11 and the first pyramid of the second camera 12 intersect. Further, the first pyramid of the first camera 11 and the second pyramid of the second camera 12 intersect. These two intersections relate to false targets q1, q2, or ghost targets.

The present invention may further comprise detecting such false targets q1, q2, or ghost targets. Ghost targets q1, q2 are common if the cameras are attempting to detect multiple targets t1, t2. Optionally, the invention may further relate to determining and removing such ghost targets q1, q2, which may be performed by, for example, determining if a center and a radius of a polyhedron Chebyshev center, i.e., the center of the largest sphere inscribed within a polyhedron representing the object, are computed for all targets t1, t2, q1, q2, including any ghost targets, a position in a physical space, as represented by the main reference system, can be calculated. Once the position in a physical space is determined, the indication may be compared against known positions of the main reference system. For example, if an object is floating above ground, it is an improbably position of an object, i.e., a ghost target q1, q2. Similarly, if an object is located below ground it is an improbably position of an object, i.e., another ghost target q1, q2. Further such discrepancies can be used to identify further ghost targets.

To determine if a ghost target q1, q2 is above or below a ground level of the area of interest A, the cameras 11, 12 may be located at an angle to the planer references point, i.e., the cameras intersection would create a shift in the heigh reference of the main reference system, such as in the z-axis of a cartesian coordinate system.

Another way of determining if an intersection relates to a ghost target is to determine if said intersection is outside the area of interest, which may relate to the area observed by at least two cameras 11, 12. In the physical world, this could correspond to being outside a room, area or house which is being monitored by said cameras 11, 12. The determined location of the intersection is compared with the coordinates which delimits the area of interest. If the intersection is determined to have a position which is outside the area of interest, then the intersection may be determined to relate to a ghost target.

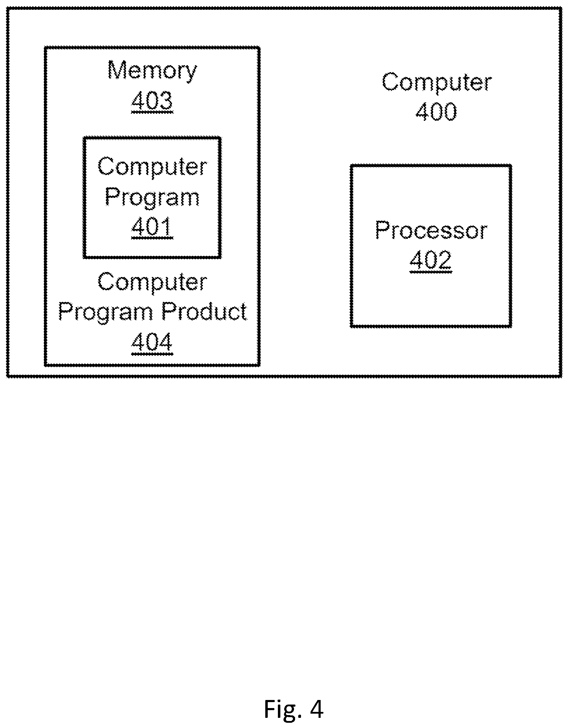

Figure 4 depicts a computer 400 for localization of at least one object in a main reference system.

The computer 400 comprises a processing circuitry (not shown). The processing circuitry may comprise one or more processors 402, such as Central Processing Units (CPUs), microprocessors, application processors, application-specific processors, Graphics Processing Units (GPUs), and Digital Signal Processors (DSPs), or a combination thereof, and a memory 403 comprising a computer program 404 comprising instructions. The computer program 404 may be downloaded to the memory 403 as a data carrier signal carrying the computer program 404. When executed by the processor(s) 402, the instructions cause the computer 400 to become operative in accordance with embodiments of the invention described above. The memory 403 may, e.g., be a Random-Access Memory (RAM), a Read-Only Memory (ROM), a Flash memory, or the like. The processing circuitry may alternatively or additionally comprise one or more Application-Specific Integrated Circuits (ASICs), Field-Programmable Gate Arrays (FPGAs), or the like, which are operative to cause the computer 400 to become operative in accordance with embodiments of the invention described above. A computer program product 404 comprises a computer readable storage medium, such as the memory 403, on which a computer program 401 is stored. The various embodiments described herein may be implemented by means of a recording medium readable by a computer or its similar device by employing for example, software, hardware or combinations thereof.

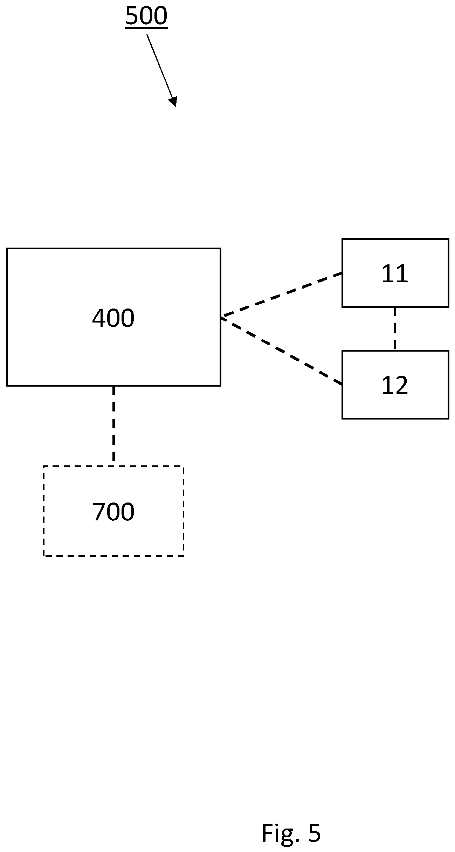

Figure 5 illustrates a system 500 for localization of the at least one object in a main reference system, according to the third aspect of the present invention.

The system 500 comprises a first camera 11 located at a first position in the main reference system, a second camera 12 located at a second position in the main reference system, a computer 400 according to the second aspect of the invention. The cameras 11, 12 and the computer 400 may be communicatively coupled, or connected, to each other. Further, the computer 400 may be communicatively connected to an auxiliary device 700. The auxiliary device 700 may be configures as, for example, a network node and/or a database. The system 500 may be configured to store information relating to the detected objects, for example by associating an object with an object Identify (ID) and update the location of an object to auxiliary device 700, such as to a database, as the indication of at least one position of an object is updated. The system 500 may further comprise a positioning device, such as a GPS. The positioning device may be used to obtain another position for the object. The auxiliary device 700 may be further configured to communicate with the cameras 11,12.

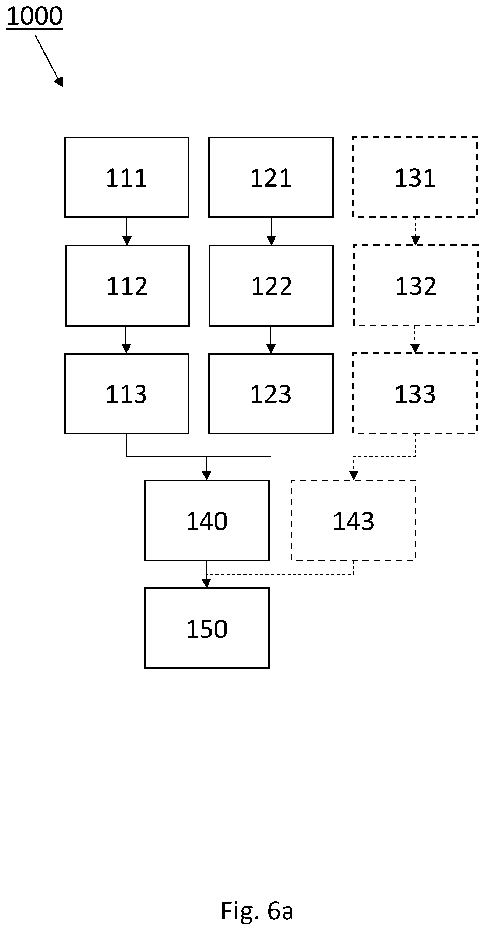

Figure 6a illustrates a method 1000 for localization of at least one object.

The method 1000 comprises receiving 111 first image data obtained by a first camera 11 located at a first position in the main reference system, wherein the first camera has a first point of view of at least a portion of the main reference system, and wherein the first point of view has an origin 11' at the first position, and detecting 112 a first object t1 of the at least one object based on the received first image data, calculating 113 a first pyramid which originates from the origin of the first camera and which envelops the detected first object.

The method further comprises receiving 121 second image data obtained by a second camera 12 located at a second position in the main reference system, wherein the second camera has a second point of view of at least another portion of the main reference system, and wherein the second point of view has an origin at the second position and is at angle with regards to the first point of view, and detecting the 122 first object based on the received second image data, and calculating 123 a second pyramid which originates from the origin of the second camera and which envelops the detected first object.

The method 1000 further comprises calculating 140 an intersection of the first pyramid and the second pyramid, and determining 150 a location of the first object based on the calculated intersection.

The method 1000 may further comprise receiving 131 third image data obtained by a third camera 13 located at a third position in the main reference system, wherein the third camera has a third point of view of at least a third portion of the main reference system, and wherein the third point of view has an origin at the third position and is at angle with regards to at least one of the first point of view and the second point of view, and detecting 132 the object based on the received third image data, and calculating 133 a third pyramid which originates from the origin of the third camera and which envelops the detected object. The method 1000 may further comprise calculating 143 a second intersection of the third pyramid and the first pyramid or the second pyramid. Further, determining 150 a location of the first object may be based on the calculated intersection and/or the calculated second intersection.

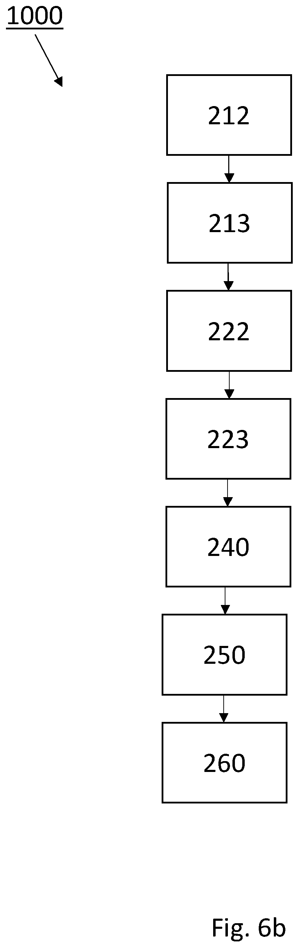

Figure 6b illustrates an optional portion of a method 1000 for localization of at least one object.

The method 1000 may further comprise detecting 212 a second object t2 of at least two objects based on the received first image data, calculating 213 another first pyramid which originates from the origin of the first camera and which envelops the detected second object, detecting 222 the second object based on the received second image data ,and calculating 223 another second pyramid which originates from the origin of the second camera and which envelops the detected second object. The method may further comprise calculating 240 an intersection of the other first pyramid and the other second pyramid, and determining 250 a location of the second object based on the calculated intersection.

The method 1000 may further comprise determining 260 that an intersection of a pyramid which envelops the first object and a pyramid which envelops the second object does not relate to the any one the at least two objects.

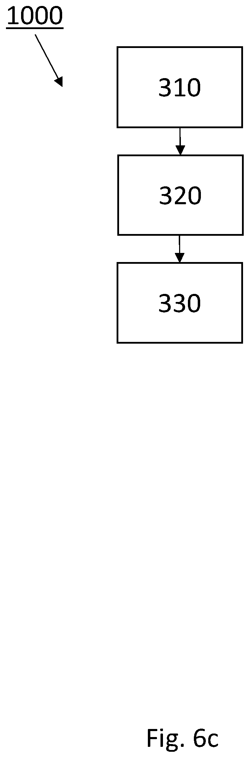

Figure 6c illustrates an optional portion of a method 1000 for localization of at least one object.

The method 1000 may further comprise detecting 310 a predetermined object based on the received first image data, wherein a position of the predetermined object in the main reference system is predetermined and wherein a size and shape of the predetermined object is predetermined, calculating 320 an angle and a distance between the first camera and the predetermined object, and updating 330 the first position in the main reference system, at which the first camera is located, based on the calculated angle and distance between the first camera and the predetermined object.

A software implementation of the embodiments described may be implemented as procedures and functions that may be implemented in separate modules and/or computer program parts, each of which is written to cause a computer system to perform one or more of the functions and operations described herein. Software code may be implemented using a software application written in any suitable programming language.

It is to be understood that the singular form "a," "an," and "the" include plural referents unless the context clearly dictates otherwise. It will be further understood that the terms, "comprises" "comprising", "includes" and/or "including" when used herein, specify the presence of stated features, integers, steps, operations, elements, and/or components, but do not preclude the presence or addition of one or more other features, integers, step, operations, elements, components, and/or groups thereof.

While various embodiments of the present disclosure are described herein, it should be understood that they have been presented by way of example only, and not limitation. Thus, the breadth and scope of the present disclosure should not be limited by any of the above-described exemplary embodiments. Moreover, any combination of the above-described elements in all possible variations thereof is comprised by the disclosure unless otherwise indicated herein or otherwise clearly contradicted by context. Additionally, while the processes described above and illustrated in the drawings are shown as a sequence of steps this was done for the sake of illustration only, unless otherwise stated. It is contemplated that some steps may be added, some steps omitted, the order of the steps may be re-arranged, and some steps may be performed in parallel.

## Claims

1. A computer implemented method (1000) for localization of at least one object (t1, t2) in a main reference system (RS0), the method comprising:
receiving (111) first image data obtained by a first camera (11) located at a first position in the main reference system, wherein the first camera has a first point of view of at least a portion of the main reference system, and wherein the first point of view has an origin (11') at the first position;
receiving (121) second image data obtained by a second camera (12) located at a second position in the main reference system, wherein the second camera has a second point of view of at least another portion of the main reference system, and wherein the second point of view has an origin at the second position and is at angle with regards to the first point of view;
detecting (112) a first object (t1) of the at least one object based on the received first image data;
calculating (113) a first pyramid which originates from the origin of the first camera and which envelops the detected first object;
detecting the (122) first object based on the received second image data;
calculating (123) a second pyramid which originates from the origin of the second camera and which envelops the detected first object;
calculating (140) an intersection of the first pyramid and the second pyramid wherein the intersection has a polyhedron shape;
determining (150) a location of the first object based on the calculated intersection.

2. The computer implemented method according to claim 1, wherein the first point of view corresponds to a first reference system (RS1) and the second point of view corresponds to a second reference system (RS3); and
wherein positions on the main reference system, the first reference system and the second reference system can be mapped to each other by using affine transformations.

3. The computer implemented method according to claim 2, wherein using affine transformations comprises using Denavit-Hartenberg rules convention.

4. The computer implemented method according to any one of claims 1 to 3, wherein the determining a location of the object further comprises:
calculating a Chebyshev center of a polyhedron defined by the intersection of the first pyramid and the second pyramid.

5. The computer implemented method according to any one of claims 1 to 4, wherein detecting the object based on the received first and/or second image data comprises using a temporal foreground integration method.

6. The computer implemented method according to any one of the preceding claims, wherein the at least one object comprises at least two objects, and wherein the method further comprises:
detecting (212) a second object (t2) of the at least two objects based on the received first image data;
calculating (213) another first pyramid which originates from the origin of the first camera and which envelops the detected second object;
detecting (222) the second object based on the received second image data;
calculating (223) another second pyramid which originates from the origin of the second camera and which envelops the detected second object;
calculating (240) an intersection of the other first pyramid and the other second pyramid;
determining (250) a location of the second object based on the calculated intersection.

7. The computer implemented method according to claim 6, wherein the method further comprises:
determining (260) that an intersection of a pyramid which envelops the first object and a pyramid which envelops the second object does not relate to any one of the at least two objects.

8. The computer implemented method according to claim 7, wherein determining that an intersection of a pyramid which envelops the first object and a pyramid which envelops the second object does not relate to any one of the at least two objects comprise determining that a location of said intersection is outside of a predefined portion of the main reference system.

9. The computer implemented method according to any one of the preceding claims, wherein the method further comprises:
receiving (131) third image data obtained by a third camera (13) located at a third position in the main reference system, wherein the third camera has a third point of view of at least a third portion of the main reference system, and wherein the third point of view has an/its origin at the third position and is at angle with regards to at least one of the first point of view and the second point of view;
detecting (132) the object based on the received third image data;
calculating (133) a third pyramid which originates from the origin of the third camera and which envelops the detected object; and
calculating (143) a second intersection of the third pyramid and the first pyramid or the second pyramid.

10. The computer implemented method according to any one of the preceding claims, wherein the method further comprises:
detecting (310) a predetermined object based on the received first image data, wherein a position of the predetermined object in the main reference system is predetermined and wherein a size and shape of the predetermined object is predetermined;
calculating (320) an angle and a distance between the first camera and the predetermined object;
updating (330) the first position in the main reference system, at which the first camera is located, based on the calculated angle and distance between the first camera and the predetermined object.

11. A computer (400) for localization of at least one object in a main reference system, the computer comprising processing circuitry (402) configured to cause the computer to:
receive first image data obtained by a first camera located at a first position in the main reference system, wherein the first camera has a first point of view of at least a portion of the main reference system, and wherein the first point of view has an/its origin at the first position;
receive second image data obtained by a second camera located at a second position in the main reference system, wherein the second camera has a second point of view of at least another portion of the main reference system, and wherein the second point of view has an origin at the second position and is at angle with regards to the first point of view;
detect a first object of the at least one object based on the received first image data;
calculate a first pyramid which originates from the origin of the first camera and which envelops the detected first object;
detect the first object based on the received second image data;
calculate a second pyramid which originates from the origin of the second camera and which envelops the detected first object;
calculate an intersection of the first pyramid and the second pyramid wherein the intersection has a polyhedron shape;;
determine a location of the first object based on the calculated intersection.

12. The computer according to claim 11, wherein the processing circuitry is further configured to cause the computer to perform a method according to any one of claims 2 to 10.

13. A system (500) for localization of at least one object in a main reference system (RS0), wherein the system comprises:
a first camera (11) located at a first position in the main reference system;
a second camera (12) located at a second position in the main reference system; and
a computer (400) according to claim 11 or 12, wherein the computer is communicatively connected to the first camera and the second camera.

14. A computer program (401), comprising instructions which when executed on a processor (402)of a computer (400) causes the computer (400) to perform a method according to any of claims 1 to 10.

15. A computer program product (404) which comprises a computer readable storage medium (403) on which a computer program (401) according to claim 14 is stored.

## Patentansprüche

1. Computerimplementiertes Verfahren (1000) zur Lokalisierung mindestens eines Objekts (t1, t2) in einem Hauptreferenzsystem (RS0), wobei das Verfahren Folgendes umfasst:
Empfangen (111) von ersten Bilddaten, die durch eine erste Kamera (11) erhalten werden, die sich an einer ersten Position in dem Hauptreferenzsystem befindet, wobei die erste Kamera einen ersten Blickwinkel auf mindestens einen Abschnitt des Hauptreferenzsystems aufweist und wobei der erste Blickwinkel einen Ursprung (11') an der ersten Position hat;
Empfangen (121) von zweiten Bilddaten, die durch eine zweite Kamera (12) erhalten werden, die sich an einer zweiten Position in dem Hauptreferenzsystem befindet, wobei die zweite Kamera einen zweiten Blickwinkel auf mindestens einen anderen Abschnitt des Hauptreferenzsystems aufweist und wobei der zweite Blickwinkel einen Ursprung an der zweiten Position hat und in einem Winkel in Bezug auf den ersten Blickwinkel ist;
Erkennen (112) eines ersten Objekts (t1) des mindestens einen Objekts basierend auf den empfangenen ersten Bilddaten;
Berechnen (113) einer ersten Pyramide, die vom Ursprung der ersten Kamera ausgeht und die das erkannte erste Objekt umschließt;
Erkennen (122) des ersten Objekts basierend auf den empfangenen zweiten Bilddaten;
Berechnen (123) einer zweiten Pyramide, die vom Ursprung der zweiten Kamera ausgeht und die das erkannte erste Objekt umschließt;
Berechnen (140) einer Schnittmenge der ersten Pyramide und der zweiten Pyramide, wobei die Schnittmenge die Form eines Polyeders aufweist;
Bestimmen (150) eines Orts des ersten Objekts basierend auf der berechneten Schnittmenge.

2. Computerimplementiertes Verfahren nach Anspruch 1, wobei der erste Blickwinkel einem ersten Referenzsystem (RS1) entspricht und der zweite Blickwinkel einem zweiten Referenzsystem (RS3) entspricht; und
wobei Positionen in dem Hauptreferenzsystem, dem ersten Referenzsystem und dem zweiten Referenzsystem durch Verwenden affiner Transformationen einander zugeordnet werden können.

3. Computerimplementiertes Verfahren nach Anspruch 2, wobei das Verwenden der affinen Transformationen Verwenden von Regeln der Denavit-Hartenberg-Konvention umfasst.

4. Computerimplementiertes Verfahren nach einem der Ansprüche 1 bis 3, wobei das Bestimmen eines Orts des Objekts ferner Folgendes umfasst:
Berechnen eines Tschebyscheff-Zentrums eines Polyeders, der durch die Schnittmenge der ersten Pyramide und der zweiten Pyramide definiert ist.

5. Computerimplementiertes Verfahren nach einem der Ansprüche 1 bis 4, wobei das Erkennen des Objekts basierend auf den empfangenen ersten und/oder zweiten Bilddaten Verwenden eines Verfahrens zur Integration im zeitlichen Vordergrund umfasst.

6. Computerimplementiertes Verfahren nach einem der vorhergehenden Ansprüche, wobei das mindestens eine Objekt mindestens zwei Objekte umfasst und wobei das Verfahren ferner Folgendes umfasst:
Erkennen (212) eines zweiten Objekts (t2) der mindestens zwei Objekte basierend auf den empfangenen ersten Bilddaten;
Berechnen (213) einer anderen ersten Pyramide, die vom Ursprung der ersten Kamera ausgeht und die das erkannte zweite Objekt umschließt;
Erkennen (222) des zweiten Objekts basierend auf den empfangenen zweiten Bilddaten;
Berechnen (223) einer anderen zweiten Pyramide, die vom Ursprung der zweiten Kamera ausgeht und die das erkannte zweite Objekt umschließt;
Berechnen (240) einer Schnittmenge der anderen ersten Pyramide und der anderen zweiten Pyramide;
Bestimmen (250) eines Orts des zweiten Objekts basierend auf der berechneten Schnittmenge.

7. Computerimplementiertes Verfahren nach Anspruch 6, wobei das Verfahren ferner Folgendes umfasst:
Bestimmen (260), dass eine Schnittmenge einer Pyramide, die das erste Objekt umschließt, und einer Pyramide, die das zweite Objekt umschließt, sich auf keines der mindestens zwei Objekte bezieht.

8. Computerimplementiertes Verfahren nach Anspruch 7, wobei das Bestimmen, dass eine Schnittmenge einer Pyramide, die das erste Objekt umschließt, und einer Pyramide, die das zweite Objekt umschließt, sich auf keines der mindestens Objekte bezieht, Bestimmen umfasst, dass sich ein Ort der Schnittmenge außerhalb eines vordefinierten Abschnitts des Hauptreferenzsystems befindet.

9. Computerimplementiertes Verfahren nach einem der vorhergehenden Ansprüche, wobei das Verfahren ferner Folgendes umfasst:
Empfangen (131) von dritten Bilddaten, die durch eine dritte Kamera (13) erhalten werden, die sich an einer dritten Position in dem Hauptreferenzsystem befindet, wobei die dritte Kamera einen dritten Blickwinkel auf mindestens einen dritten Abschnitt des Hauptreferenzsystems aufweist und wobei der dritte Blickwinkel einen/seinen Ursprung an der dritten Position hat und in einem Winkel in Bezug auf mindestens einen von dem ersten Blickwinkel und dem zweiten Blickwinkel ist;
Erkennen (132) des Objekts basierend auf den empfangenen dritten Bilddaten;
Berechnen (133) einer dritten Pyramide, die vom Ursprung der dritten Kamera ausgeht und die das erkannte Objekt umschließt; und
Berechnen (143) einer zweiten Schnittmenge der dritten Pyramide und der ersten Pyramide oder der zweiten Pyramide.

10. Computerimplementiertes Verfahren nach einem der vorhergehenden Ansprüche, wobei das Verfahren ferner Folgendes umfasst:
Erkennen (310) eines vorbestimmten Objekts basierend auf den empfangenen ersten Bilddaten, wobei eine Position des vorbestimmten Objekts in dem Hauptreferenzsystem vorbestimmt ist und wobei eine Größe und eine Form des vorbestimmten Objekts vorbestimmt sind;
Berechnen (320) eines Winkels und eines Abstands zwischen der ersten Kamera und dem vorbestimmten Objekt;
Aktualisieren (330) der ersten Position im Hauptreferenzsystem, an der sich die erste Kamera befindet, basierend auf dem berechneten Winkel und Abstand zwischen der ersten Kamera und dem vorbestimmten Objekt.

11. Computer (400) zur Lokalisierung mindestens eines Objekts in einem Hauptreferenzsystem, wobei der Computer Verarbeitungsschaltungsanordnung (402) umfasst, die dazu konfiguriert ist, den Computer zu Folgendem zu veranlassen:
Empfangen von ersten Bilddaten, die durch eine erste Kamera erhalten werden, die sich an einer ersten Position in dem Hauptreferenzsystem befindet, wobei die erste Kamera einen ersten Blickwinkel auf mindestens einen Abschnitt des Hauptreferenzsystems aufweist und wobei der erste Blickwinkel einen/seinen Ursprung an der ersten Position hat;
Empfangen von zweiten Bilddaten, die durch eine zweite Kamera erhalten werden, die sich an einer zweiten Position in dem Hauptreferenzsystem befindet, wobei die zweite Kamera einen zweiten Blickwinkel auf mindestens einen anderen Abschnitt des Hauptreferenzsystems aufweist und wobei der zweite Blickwinkel einen Ursprung an der zweiten Position hat und in einem Winkel in Bezug auf den ersten Blickwinkel ist;
Erkennen eines ersten Objekts des mindestens einen Objekts basierend auf den empfangenen ersten Bilddaten;
Berechnen einer ersten Pyramide, die vom Ursprung der ersten Kamera ausgeht und die das erkannte erste Objekt umschließt;
Erkennen des ersten Objekts basierend auf den empfangenen zweiten Bilddaten;
Berechnen einer zweiten Pyramide, die vom Ursprung der zweiten Kamera ausgeht und die das erkannte erste Objekt umschließt;
Berechnen einer Schnittmenge der ersten Pyramide und der zweiten Pyramide, wobei die Schnittmenge die Form eines Polyeders aufweist;
Bestimmen eines Orts des ersten Objekts basierend auf der berechneten Schnittmenge.

12. Computer nach Anspruch 11, wobei die Verarbeitungsschaltungsanordnung ferner dazu konfiguriert ist, den Computer zum Durchführen eines Verfahrens nach einem der Ansprüche 2 bis 10 zu veranlassen.

13. System (500) zur Lokalisierung mindestens eines Objekts in einem Hauptreferenzsystem (RS0), wobei das System Folgendes umfasst:
eine erste Kamera (11), die sich an einer ersten Position in dem Hauptreferenzsystem befindet;
eine zweite Kamera (12), die sich an einer zweiten Position in dem Hauptreferenzsystem befindet; und
einen Computer (400) nach Anspruch 11 oder 12, wobei der Computer kommunikativ mit der ersten Kamera und der zweiten Kamera verbunden ist.

14. Computerprogramm (401), umfassend Anweisungen, die bei Ausführung auf einem Prozessor (402) eines Computers (400) den Computer (400) zum Durchführen eines Verfahrens nach einem der Ansprüche 1 bis 10 veranlassen.

15. Computerprogrammprodukt (404), das ein computerlesbares Speichermedium (403) umfasst, auf dem ein Computerprogramm (401) nach Anspruch 14 gespeichert ist.

## Revendications

1. Procédé mis en œuvre par ordinateur (1000) pour une localisation d'au moins un objet (t1, t2) dans un système de référence principal (RS0), le procédé comprenant :
la réception (111) de premières données d'image obtenues par une première caméra (11) située à une première position dans le système de référence principal, dans lequel la première caméra présente un premier point de vue d'au moins une partie du système de référence principal, et dans lequel le premier point de vue présente une origine (11') à la première position ;
la réception (121) de deuxièmes données d'image obtenues par une deuxième caméra (12) située à une deuxième position dans le système de référence principal, dans lequel la deuxième caméra présente un deuxième point de vue d'au moins une autre partie du système de référence principal, et dans lequel le deuxième point de vue présente une origine à la deuxième position et se trouve à un angle par rapport au premier point de vue ;
la détection (112) d'un premier objet (t1) parmi l'au moins un objet sur la base des premières données d'image reçues ;
le calcul (113) d'une première pyramide qui émane de l'origine de la première caméra et qui enveloppe le premier objet détecté ;
la détection (122) du premier objet sur la base des deuxièmes données d'image reçues ;
le calcul (123) d'une deuxième pyramide qui émane de l'origine de la deuxième caméra et qui enveloppe le premier objet détecté ;
le calcul (140) d'une intersection de la première pyramide et de la deuxième pyramide, dans lequel l'intersection présente une forme polyèdre ;
la détermination (150) d'un emplacement du premier objet sur la base de l'intersection calculée.

2. Procédé mis en œuvre par ordinateur selon la revendication 1, dans lequel le premier point de vue correspond à un premier système de référence (RS1) et le deuxième point de vue correspond à un deuxième système de référence (RS3) ; et
dans lequel des positions sur le système de référence principal, le premier système de référence et le deuxième système de référence peuvent être mises en correspondance entre elles à l'aide de transformations affines.

3. Procédé mis en œuvre par ordinateur selon la revendication 2, dans lequel l'utilisation de transformations affines comprend l'utilisation d'une convention de règles Denavit-Hartenberg.

4. Procédé mis en œuvre par ordinateur selon l'une quelconque des revendications 1 à 3, dans lequel la détermination d'un emplacement de l'objet comprend en outre :
le calcul d'un centre de Tchebychev d'un polyèdre défini par l'intersection de la première pyramide et de la deuxième pyramide.

5. Procédé mis en œuvre par ordinateur selon l'une quelconque des revendications 1 à 4, dans lequel la détection de l'objet sur la base des premières et/ou deuxièmes données d'image reçues comprend l'utilisation d'un procédé d'intégration de premier plan temporel.

6. Procédé mis en œuvre par ordinateur selon l'une quelconque des revendications précédentes, dans lequel l'au moins un objet comprend au moins deux objets, et dans lequel le procédé comprend en outre :
la détection (212) d'un deuxième objet (t2) des au moins deux objets sur la base des premières données d'image reçues ;
le calcul (213) d'une autre première pyramide qui émane de l'origine de la première caméra et qui enveloppe le deuxième objet détecté ;
la détection (222) du deuxième objet sur la base des deuxièmes données d'image reçues ;
le calcul (223) d'une autre deuxième pyramide qui émane de l'origine de la deuxième caméra et qui enveloppe le deuxième objet détecté ;
le calcul (240) d'une intersection de l'autre première pyramide et de l'autre deuxième pyramide ;
la détermination (250) d'un emplacement du deuxième objet sur la base de l'intersection calculée.

7. Procédé mis en œuvre par ordinateur selon la revendication 6, dans lequel le procédé comprend en outre :
la détermination (260) qu'une intersection d'une pyramide qui enveloppe le premier objet et d'une pyramide qui enveloppe le deuxième objet n'est pas en relation avec l'un quelconque des au moins deux objets.

8. Procédé mis en œuvre par ordinateur selon la revendication 7, dans lequel la détermination qu'une intersection d'une pyramide qui enveloppe le premier objet et d'une pyramide qui enveloppe le deuxième objet n'est pas en relation avec l'un quelconque des au moins deux objets comprend la détermination qu'un emplacement de ladite intersection se trouve à l'extérieur d'une partie prédéfinie du système de référence principal.

9. Procédé mis en œuvre par ordinateur selon l'une quelconque des revendications précédentes, dans lequel le procédé comprend en outre :
la réception (131) de troisièmes données d'image obtenues par une troisième caméra (13) située à une troisième position dans le système de référence principal, dans lequel la troisième caméra présente un troisième point de vue d'au moins une troisième partie du système de référence principal, et dans lequel le troisième point de vue présente une/son origine à la troisième position et se trouve à un angle par rapport à au moins l'un parmi le premier point de vue et le deuxième point de vue ;
la détection (132) de l'objet sur la base des troisièmes données d'image reçues ;
le calcul (133) d'une troisième pyramide qui émane de l'origine de la troisième caméra et qui enveloppe l'objet détecté ; et
le calcul (143) d'une deuxième intersection de la troisième pyramide et de la première pyramide ou de la deuxième pyramide.

10. Procédé mis en œuvre par ordinateur selon l'une quelconque des revendications précédentes, dans lequel le procédé comprend en outre :
la détection (310) d'un objet prédéterminé sur la base des premières données d'image reçues, dans lequel une position de l'objet prédéterminé dans le système de référence principal est prédéterminée et dans lequel une taille et une forme de l'objet prédéterminé sont prédéterminées ;
le calcul (320) d'un angle et d'une distance entre la première caméra et l'objet prédéterminé ;
la mise à jour (330) de la première position dans le système de référence principal, à laquelle se trouve la première caméra, sur la base de l'angle et de la distance calculés entre la première caméra et l'objet prédéterminé.

11. Ordinateur (400) pour une localisation d'au moins un objet dans un système de référence principal, l'ordinateur comprenant une circuiterie de traitement (402) configurée pour amener l'ordinateur à :
recevoir des premières données d'image obtenues par une première caméra située à une première position dans le système de référence principal, dans lequel la première caméra présente un premier point de vue d'au moins une partie du système de référence principal, et dans lequel le premier point de vue présente une/son origine à la première position ;
recevoir des deuxièmes données d'image obtenues par une deuxième caméra située à une deuxième position dans le système de référence principal, dans lequel la deuxième caméra présente un deuxième point de vue d'au moins une autre partie du système de référence principal, et dans lequel le deuxième point de vue présente une origine à la deuxième position et se trouve à un angle par rapport au premier point de vue ;
détecter un premier objet parmi l'au moins un objet sur la base des premières données d'image reçues ;
calculer une première pyramide qui émane de l'origine de la première caméra et qui enveloppe le premier objet détecté ;
détecter le premier objet sur la base des deuxièmes données d'image reçues ;
calculer une deuxième pyramide qui émane de l'origine de la deuxième caméra et qui enveloppe le premier objet détecté ;
calculer une intersection de la première pyramide et de la deuxième pyramide, dans lequel l'intersection présente une forme polyèdre ;
déterminer un emplacement du premier objet sur la base de l'intersection calculée.

12. Ordinateur selon la revendication 11, dans lequel la circuiterie de traitement est en outre configurée pour amener l'ordinateur à réaliser un procédé selon l'une quelconque des revendications 2 à 10.

13. Système (500) de localisation d'au moins un objet dans un système de référence principal (RS0), dans lequel le système comprend :
une première caméra (11) située à une première position dans le système de référence principal ;
une deuxième caméra (12) située à une deuxième position dans le système de référence principal ; et
un ordinateur (400) selon la revendication 11 ou 12, dans lequel l'ordinateur est connecté en communication à la première caméra et à la deuxième caméra.

14. Programme informatique (401), comprenant des instructions qui, lorsqu'elles sont exécutées sur un processeur (402) d'un ordinateur (400), amènent l'ordinateur (400) à réaliser un procédé selon l'une quelconque des revendications 1 à 10.

15. Produit de programme informatique (404) qui comprend un support de stockage lisible par ordinateur (403) sur lequel est stocké un programme informatique (401) selon la revendication 14.
